# EUROPÄISCHE PATENTANMELDUNG

(11) **EP 0 729 801 A1**
(43) Veröffentlichungstag der Anmeldung: **04.09.1996**
(21) Anmeldenummer: 96102619.2
(22) Anmeldetag: 22.02.1996
(51) Int. Cl.: B23B 31/113, B28D 1/04

(54) **Bohrsatz mit Hohlbohrer für Bohrungen in Mauerwerken oder Beton**

(30) Priorität: 02.03.1995 DE 29503542 U; 03.06.1995 DE 19520522
(71) Anmelder: Biedron, Ralf, 44879 Bochum (DE)
(72) Erfinder: Biedron, Ralf, 44879 Bochum (DE)
(74) Vertreter: Finkener und Ernesti Patentanwälte

(57) **Zusammenfassung**

Der beschriebene Bohrsatz mit Hohlbohrer (11) besteht aus einem Fußteil (1) als Wechselhalter und einem mit dem Fußteil lösbar verbundenen Hohlbohrer (11). Der Hohlbohrer (11) enthält am Verbindungsende einen Ringflansch (15) mit nasenartigen Vorsprüngen (16), die mit Umfangsnuten (5) am Fußteil (1) nach Art einer Nut-Federverbindung korrespondieren, wobei die gegenseitige Verbindung durch eine Drehung des Hohlbohrers (11) gegenüber dem Fußteil bis zu einem Anschlag bewirkt wird. Auf der Oberseite des Fußteils (1) ist eine Scheibenlamelle (10) gelagert, die in der Verbindungsstellung unter Spannung steht und den schlüssigen Zusammenhalt der Verbindungsteile unterstützt. Dabei kann durch eine Spannmutter (24) und Druckrollen (28) der Anpreßdruck zusätzlich erhöht werden. Der Fußteil (1) ist für das Aufsetzen von Hohlbohrern (11) mit unterschiedlicher Durchmessergröße geeignet. Hierzu benötigen die verschiedenen Hohlbohrer (11) lediglich einen gleich großen Ringflansch (15) als Verbindungselement mit dem Fußteil (1).

## Beschreibung

Die Erfindung betrifft einen Bohrsatz mit Hohlbohrer für Bohrungen in Mauerwerken oder Beton gemäß dem Oberbegriff des Anspruchs 1.

Für Großlochbohrungen in Mauerwerken ist ein Wechselhalter bekannt, der auf den Gewindezapfen einer üblichen Handbohrmaschine aufschraubbar ist. Er trägt an seinem freien Ende eine zylindrische Scheibe, die an ihrer Mantelfläche zwei radial abstehende Zapfen aufweist. Der Hohlbohrer ist an seinem Anschlußende mit zwei winkelförmigen Führungsnuten versehen, die beim anfänglichen axialen Aufstecken und nachfolgendem Drehen des Hohlbohrers die Zapfen aufnehmen. Durch eine leichte Neigung der in Umfangsrichtung verlaufenden Enden der Führungsnuten ist eine Verklemmung zwischen Hohlbohrer und Fußteil erzielbar.

Dieser bekannte Bohrsatz hat u. a. den Nachteil, daß für jede Hohlbohrergröße ein dazu passender Halter benötigt wird. Wenn also an einer Baustelle unterschiedlich große Löcher zu bohren sind, muß jeweils mit dem Hohlbohrer auch der an der Handbohrmaschine befestigte Halter gewechselt werden, was entsprechend zeitaufwendig ist. Außerdem können die offenen Führungsnuten am Befestigungsende des Hohlbohrers bei der Handhabung auf der Baustelle leicht beschädigt werden. Hier will die Erfindung Abhilfe schaffen.

Die Aufgabe der Erfindung besteht darin, einen Bohrsatz mit Hohlbohrer so zu gestalten, daß ein und derselbe Fußteil als Wechselhalter zum Halten von Hohlbohrern in unterschiedlichen Größen verwendbar ist, daß das Aufsetzen und Abnehmen eines Hohlbohrers von Hand problemlos und kurzfristig bewirkt werden kann und daß die Verbindungsteile einen sicheren Halt in der Verbindungsstellung gewährleisten und gegen äußere Einwirkungen unempfindlich sind.

Ausgehend von dem bekannten Bohrsatz wird diese Aufgabe erfindungsgemäß durch die Anwendung der folgenden Merkmale gelöst:
a) der Fußteil enthält eine kreisrunde Scheibe mit am Umfang mit gleichem Abstand voneinander angeordneten und gegenüber der Stirnfläche vorstehenden Ansätzen, die mit dem Umfang der Scheibe bündig stehen,
b) in jedem Ansatz ist an seiner Innenseite eine zur Scheibenmitte offene Nut mit etwa rechteckigem Querschnitt enthalten, wobei die axialen Wandungen der Nuten auf einer gemeinsamen Kreislinie verlaufen,
c) am Verbindungsende des Hohlbohrers ist ein Ringflansch mit radialen nasenartigen Vorsprüngen befestigt, die mit den Freiräumen zwischen den Ansätzen am Fußteil korrespondieren,
d) die Umfangskanten der Vorsprünge verlaufen auf einem gemeinsamen Umkreis, dessen Durchmesser dem Innendurchmesser der axialen Wandungen der Nuten in den Ansätzen am Fußteil entspricht,
e) an den Abschnitten zwischen den aufeinanderfolgenden Vorsprüngen liegen die Außenkanten auf einem Hüllkreis, dessen Durchmesser kleiner ist als der Innendurchmesser der Ansätze am Fußteil, und
f) am in Umfangsrichtung rückwärtigen Ende jedes Vorsprungs ist eine radial vorstehende Nase als Endanschlag angeformt.

Vorteilhafte Weiterbildungen der Erfindung sind in den Unteransprüchen beschrieben.

Zur Erleichterung der anfänglichen Drehbewegung des Hohlbohrers ist es zweckmäßig, an den Vorsprüngen an ihrer Einlaufseite je eine radial ansteigende Schrägfläche vorzusehen.

Für einen sicheren Halt zwischen Hohlbohrer und Fußteil werden vorteilhafterweise wenigstens drei, vorzugsweise vier ineinandergreifende Ansätze bzw. Vorsprünge vorgesehen. In der Gebrauchsstellung sind die Vorsprünge des Ringflansches in den Innennuten der Ansätze des Fußteils formschlüssig gehalten.

Zur Erhöhung des Reibungsschlusses zwischen den in den Nuten einliegenden Vorsprüngen ist es zweckmäßig, auf der Oberfläche des Fußteils eine dünne Scheibenfederlamelle anzuordnen, die in ihrer Lage durch einen an einem zentralen Zapfen des Fußteils angreifenden Sicherungsring gehalten ist. Beim Aufsetzen eines Hohlbohrers auf den Fußteil wird die leicht gewölbte Federlamelle in axialer Richtung gespannt, und die dabei entstehende Spannkraft erhöht den Reibungsschluß der Vorsprünge in den Führungsnuten, womit ein sicherer Zusammenhalt der beiden Teile gewährleistet ist.

Bei Hohlbohrern in einer üblichen Größe, z. B. für Schalterdosenbohrungen, ist der Ringflansch zum Befestigen des Hohlbohrers am Fußteil zweckmäßigerweise als Außenflansch ausgebildet. Auch bei Hohlbohrern mit kleinerem Durchmesser hat der Ringflansch die gleichen Außenkonturen.

Für Hohlbohrer, deren Durchmesser größer ist als der Durchmesser des Fußteils, ist eine zweckmäßige Weiterbildung der Erfindung vorgesehen, die darin besteht, daß der Ringflansch im Inneren des Hohlbohrers angeordnet ist und durch radiale Stege mit der Wandung des Hohlbohrers verbunden ist.

Die beschriebene Einrastverbindung zwischen Hohlbohrer und Fußteil bietet für Hohlbohrer normaler Länge einen funktionstüchtigen Zusammenhalt der beiden Teile. Es gibt jedoch Fälle, in denen besonders lange Hohlbohrer benötigt werden. Bei größerer Länge des Hohlbohrers können sich die Fertigungstoleranzen an der Einrastverbindung ungünstig auswirken und zu unerwünschten Verkantungen des Hohlbohrers gegenüber dem Fußteil führen. Für solche Anwendungsfälle bietet die Erfindung eine zweckmäßige Weiterbildung, die den formschlüssigen Zusammenhalt zwischen Hohlbohrer und Fußteil verbessert.

Diese Weiterbildung ist erfindungsgemäß durch folgende Merkmale gekennzeichnet:
a) der Hals des Fußteils trägt auf einem Außengewinde eine Spannmutter,
b) an der Spannmutter ist an ihrem axial inneren Ende ein Druckring gelagert, der der Unterseite der Deckscheibe des Fußteils benachbart ist,
c) in der Deckscheibe sind vorzugsweise vier mit gleichem Abstand voneinander angeordnete, in Umfangsrichtung verlaufende Langlöcher enthalten,
d) in jedem Langloch ist nach Art eines Wälzlagerkäfigs eine Druckrolle frei beweglich gehalten und
e) die Druckrollen sind in ihrem Durchmesser so bemessen, daß sie beim Anziehen der Spannmutter gegenüber der Oberseite der Deckscheibe vortreten und während der Spannbewegung an der Unterseite der Scheibenlamelle abrollen.

Diese weitere Ausführungsform bietet die Möglichkeit, durch Drehen der Spannmutter den Ringflansch am Hohlbohrer mit dem Fußteil auf einfache Weise zu verspannen, so daß eine spielfreie Verbindung zwischen den beiden Teilen vorliegt.

Eine zweckmäßige Weiterbildung dieser Ausführungsform besteht darin, daß an der Spannmutter ein achsparalleler federbelasteter Stift angeordnet ist, der mit einem Anschlagzapfen an der Unterseite der Deckscheibe eine Sicherung gegen eine Rückdrehung der Spannmutter über ihre Ausgangsstellung hinaus bildet.

Zur zweckmäßigen Einstellung des Anschlagzapfens sind in der Deckscheibe mehrere, mit gleichem Abstand voneinander über den Umfang verteilte Bohrungen für die wahlweise Aufnahme eines Anschlagzapfens enthalten.

Ein wesentlicher Vorteil des neuen Bohrsatzes ist darin zu sehen, daß der Fußteil zum Halten von Hohlbohrern in unterschiedlichen Größen geeignet ist. Zu diesem Zweck werden die auf einer Baustelle in unterschiedlichen Größen benötigten Hohlbohrer an ihrem Fußende mit einem Ringflansch versehen, dessen Umfangskonturen dem Fußteil entsprechen. Bei Bohrarbeiten braucht somit beim Übergang auf einen Hohlbohrer mit anderem Durchmesser lediglich der Hohlbohrer ausgewechselt zu werden. Der Fußteil bleibt mit der Handbohrmaschine verbunden. Der neue Bohrsatz bietet somit die Vorteile eines Schnell-Wechselhalters für Hohlbohrer. Außerdem bietet die formschlüssige Nut-Feder-Verbindung zwischen Hohlbohrer und Fußteil einen sicheren Zusammenhalt der leicht lösbar miteinander verbundenen Teile.

Ausführungsbeispiele der Erfindung sind in der Zeichnung schematisch dargestellt und werden nachfolgend näher erläutert. Es zeigt:
- Fig. 1: eine Seitenansicht eines Fußteils gemäß der Erfindung in einem Schnitt entlang der Linie I-I der Fig. 2,
- Fig. 2: eine Draufsicht des Fußteils,
- Fig. 3: eine Seitenansicht eines Hohlbohrers gemäß der Erfindung in einem Schnitt entlang der Linie II-II der Fig. 4 und
- Fig. 4: eine Draufsicht des Hohlbohrers,
- Fig. 5: eine Seitenansicht einer weiterentwickelten Ausführungsform eines Bohrsatzes in einem Schnitt in den Ebenen der Linie III-III der Fig. 6,
- Fig. 6: eine Draufsicht des Bohrsatzes in einem Schnitt in den Ebenen der Linie IV-IV der Fig. 5,
- Fig. 7: als Ausschnitt eine Seitenansicht einer anderen Weiterbildung des Bohrsatzes im Bereich der Verbindungsteile zwischen Fußteil und Hohlbohrer in einem Schnitt in den Ebenen der Linien V-V der Fig. 8 und
- Fig. 8: eine Draufsicht des Bohrsatzes nach Fig. 7 in einem Schnitt in der Ebene der Linie VI-VI der Fig. 7.

Der Fußteil 1 enthält einen zylindrischen Sockel mit einer zentralen Gewindebohrung 2 und eine an der Oberseite angeformte kreisrunde Scheibe 3. Mit der Gewindebohrung 2 ist der Fußteil 1 auf den Gewindezapfen einer üblichen Handbohrmaschine aufschraubbar.

Am Umfang der kreisrunden Scheibe 3 sind vier axial vorstehende Ansätze 4 mit gleichem Abstand voneinander angeformt. Die Ansätze 4 und die Zwischenräume zwischen aufeinanderfolgenden Ansätzen 4 sind in Umfangsrichtung etwa gleich lang. Jeder Ansatz 4 ist im Querprofil winklig gestaltet und enthält an seiner Innenseite eine zur Scheibenmitte offene Nut 5 mit rechteckigem Querschnitt.

Aus der Oberfläche 6 der kreisrunden Scheibe 3 ragt ein zentraler zapfenartiger Ansatz 7 vor. Am unteren Ende des Ansatzes 7 ist in seiner Mantelfläche eine umlaufende Nut 8 eingeschnitten, die zur Aufnahme eines Sicherungsringes 9 dient. Weiter ist auf der Oberseite der kreisrunden Scheibe 3 eine Scheibenfederlamelle 10 angeordnet, die durch den Sicherungsring 9 in ihrer Anlagestellung gehalten wird.

Der Hohlbohrer 11 besteht im wesentlichen aus einem Rohrstück 12 mit am vorderen Ende befestigten Profilstücken 13 aus Diamant, deren radiale Stärke größer ist als die Wandstärke des Rohrstückes 12, die die Bohrkrone des Hohlbohrers 11 bilden. Zwischen den Profilstücken 13 aus Diamant sind in der Wandung des Rohrstückes 12 Axialnuten 14 enthalten, in die zu Beginn einer Bohrarbeit vorübergehend ein Zentrierbohrhalter eingesetzt wird.

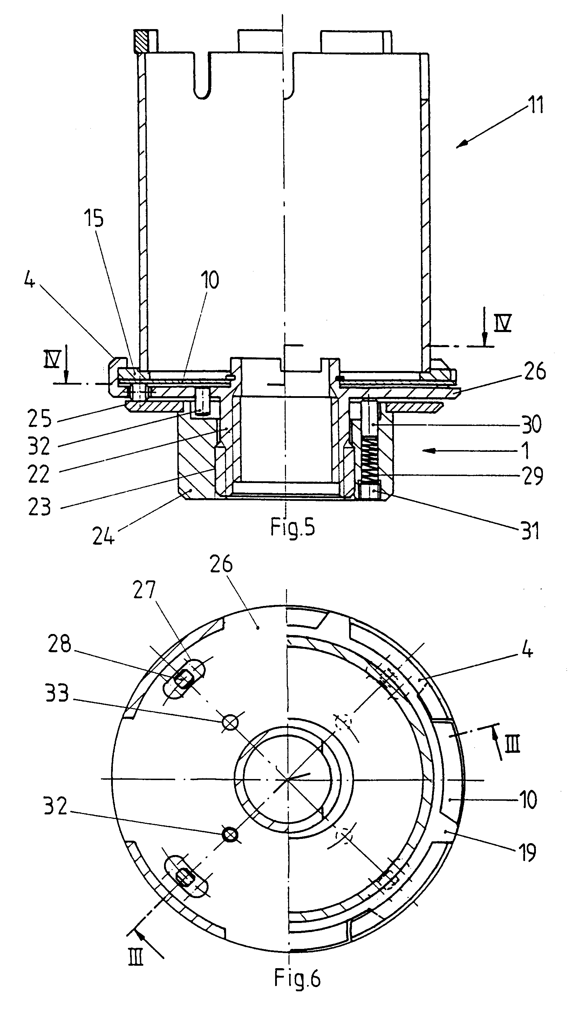

Am Fußende des Rohrstückes 12 ist ein Ringflansch 15 durch Löten oder Schweißen befestigt. Die äußere Kontur des Ringflansches 15 ergibt sich aus Fig. 4. Danach enthält der Ringflansch 15 vier radial gerichtete nasenartige Vorsprünge 16, die in ihrer Umfangslänge mit den Freiräumen 17 zwischen den Ansätzen 4 des Fußteils 1 korrespondieren. Die Umfangskanten 18 der Vorsprünge 16 verlaufen auf einem gemeinsamen Umkreis, dessen Durchmesser dem Innendurchmesser der axialen Wandungen der Nuten 5 in den Ansätzen 4 entspricht. Die axiale Dicke des Ringflansches 15 ist so bemessen, daß die Vorsprünge 16 unter Gleitberührung leichtgängig in die Nuten 5 der Ansätze 4 eindrehbar sind. Die Eindrehbewegung wird begrenzt durch radial vorstehende Nasen 19, die am rückwärtigen Ende - bezogen auf die Drehbewegung beim Einsetzen des Hohlbohrers - jedes Vorsprungs 18 als Endanschlag angeformt sind. Diese Endanschläge 19 kommen an den Ansätzen 4 auf ihrer Einlaufseite zur Anlage. Über diese vier Endanschläge wird das Drehmoment vom Fußteil 1 auf den Hohlbohrer 11 übertragen.

Wie Fig. 4 zeigt, sind die Vorsprünge 16 an ihrer Einlaufseite mit einer radial ansteigenden Schrägfläche 20 versehen. Diese Schrägflächen 20 sollen dazu beitragen, daß nach dem Aufsetzen des Hohlbohrers 11 auf den Fußteil 1 zu Beginn der nachfolgenden Drehbewegung das Einfahren der zungenartigen Vorsprünge 16 in die Nuten 5 möglichst sanft und stoßfrei durchgeführt werden kann.

Beim Aufsetzen eines Hohlbohrers 11 auf den Fußteil 1 wird die Scheibenlamelle zwischen Ringflansch 15 und Oberfläche 6 des Fußteils 1 verspannt. Die dabei entstehende elastische Druckkraft erhöht den Reibungsschluß der Ansätze 16 in den Nuten 5 und sorgt damit für einen sicheren Zusammenhalt zwischen Hohlbohrer 11 und Fußteil 1, so daß ein unbeabsichtigtes Lösen des Hohlbohrers 11 bei Nichtbenutzung vermieden wird. Das Verbinden des Hohlbohrers 11 mit dem Fußteil 1 wird, nachdem der Hohlbohrer 11 auf die Oberfläche 6 aufgesetzt worden ist, durch Drehen gegen die Bohrdrehrichtung bewirkt.

Werden für Bohrarbeiten Hohlbohrer mit unterschiedlichen Durchmessergrößen benötigt, so ist bei allen Hohlbohrern der Ringflansch 15 in seiner äußeren Kontur gleich ausgebildet. Unterschiedlich ist lediglich die mittige Öffnung der Ringflansche, die dem Durchmesser des jeweiligen Hohlbohrers angepaßt ist. Dabei ist der Innendurchmesser eines Ringflansches nicht kleiner als der Innendurchmesser des Hohlbohrers 11, so daß ein loser Bohrkern nach Abnahme des Hohlbohrers 11 vom Fußteil 1 leicht nach hinten ausgestoßen werden kann.

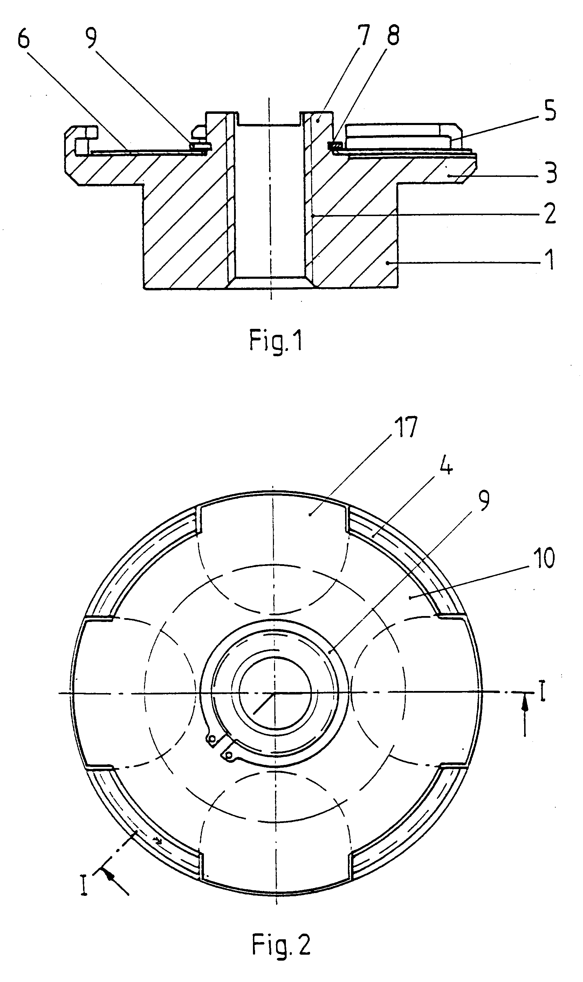

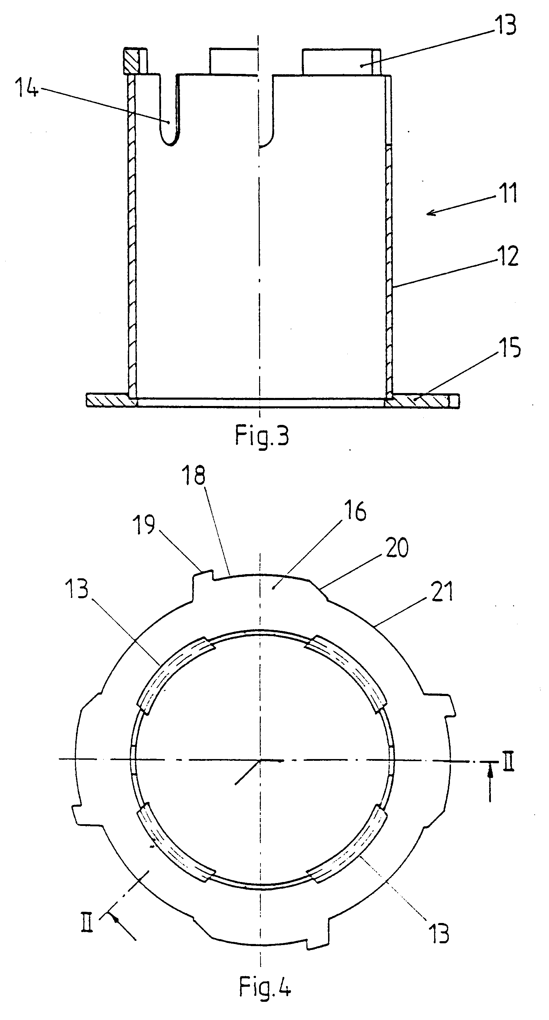

Die Ausführungsform der Fig. 5 bis 8 stimmt mit der vorher beschriebenen Ausführungsform in der Handhabung und Funktionsweise überein. Hinzugekommen ist als Weiterbildung eine durch Gewindemittel bewirkte Verspannung zwischen Fußteil 1 und Hohlbohrer 11. Die Fig. 5 und 6 zeigen den Hohlbohrer 11 in der Spannstellung am Fußteil 1. Nach dem axialen Aufsetzen des Hohlbohrers auf den Fußteil 1 wird der Hohlbohrer im Uhrzeigersinn bis in die Anschlagstellung gedreht. Danach erfolgt die Verspannung, die nachfolgend beschrieben wird. Für übereinstimmende Bauteile wurden die Bezugszahlen der Ausführungsform der Fig. 1 bis 4 übernommen.

Am Fußteil 1 ist der Hals 22 in seinem unteren Abschnitt mit einem Außengewinde 23 versehen, auf dem eine Spannmutter 24 gelagert ist. Die Spannmutter 24 trägt an ihrem inneren Ende einen Druckring 25, der der Unterseite der Deckscheibe 26 des Fußteils 1 benachbart ist.

In der Deckscheibe 26 sind in der Nähe ihres Umfangs vier mit gleichem Abstand voneinander angeordnete, in Umfangsrichtung verlaufende Langlöcher 27 enthalten, wobei in jedem Langloch 27 eine Druckrolle 28 frei beweglich angeordnet ist. Die Druckrollen 28 liegen mit ihrer Lauffläche auf der Oberseite des Druckringes 25 und haben einen Durchmesser, der größer ist als die Dicke der Deckscheibe 26. Durch Anziehen der Spannmutter 24 werden die Druckrollen 28 gegenüber der Deckscheibe 26 angehoben und kommen dabei mit der Unterseite der Scheibenlamelle 10 in Druckberührung. Durch weiteres Festziehen der Spannmutter 24 entsteht so eine Spannverbindung zwischen dem Flanschring 15 des Hohlbohrers 11 und den Ansätzen 4, in deren Nuten der Flanschring 15 gehalten ist.

Während des Festziehens der Spannmutter 24 führen die Druckrollen 28 eine Abrollbewegung innerhalb der Nuten 27 aus. Es findet also keine Reibungsbewegung zwischen den gegeneinander bewegbaren Teilen statt. Durch die Abrollbewegung wird im Vergleich zu einer Reibungsbewegung ein unerwünschtes Verklemmen vermieden, so daß das Lösen der Spannmutter 24 zum Wechseln eines Hohlbohrers 11 mit geringer Kraft durchführbar ist.

Die Rückdrehbewegung der Spannmutter 24 ist durch einen Anschlag begrenzt. Zu diesem Zweck ist in der Wandung der Spannmutter 24 in einer achsparallelen Bohrung ein durch eine Feder 29 belasteter Stift 30 gelagert. An ihrem rückwärtigen Ende liegt die Feder 29 an einer Madenschraube 31 an.

Als Anschlag für den Stift 30 dient ein Anschlagzapfen 32, der in einer Bohrung 33 in der Deckscheibe 26 unverschiebbar gehalten ist. Die Deckscheibe 26 enthält vier über den Umfang gleichmäßig verteilte Bohrungen 33, so daß bei der Montage eine für die Ruhestellung der Spannmutter 24 geeignete Bohrung 33 für das Einschlagen des Anschlagzapfens 32 gewählt werden kann.

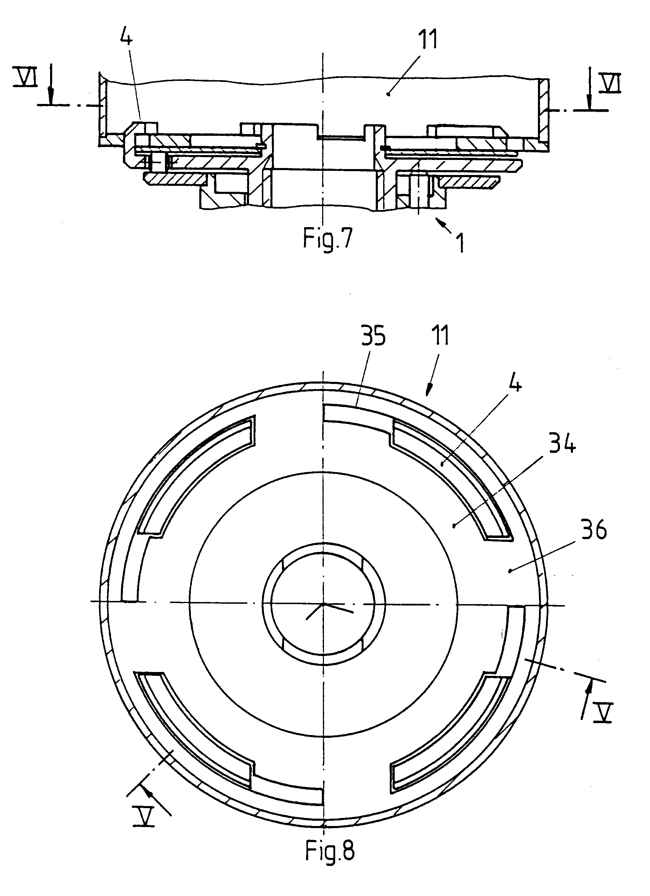

Die Fig. 7 und 8 zeigen die Verwendung eines Hohlbohrers 11, dessen Durchmesser größer ist als der Durchmesser des Fußteils 1 des Bohrsatzes. In diesem Fall ist im Inneren des Hohlbohrers 11 ein Ringflansch 34 angeordnet, der sektorförmige Schlitze 35 aufweist, wobei die Innenkontur der Schlitze 35 der Außenkontur eines außen am Hohlbohrer 11 angebrachten Ringflansches (wie bei den Ausführungsformen der Fig. 1 bis 6) entspricht. Fig. 8 zeigt in einer Draufsicht auf den Fußteil 1 den Zustand des auf den Fußteil 1 aufgesetzten Hohlbohrers 11, bevor dieser im Uhrzeigersinn gedreht wird. Bei dieser Ausführungsform ist der innenliegende Ringflansch 34 über radiale Stege 36 mit der Wandung des Hohlbohrers 11 verbunden.

## Patentansprüche

1. Bohrsatz mit Hohlbohrer für Bohrungen in Mauerwerken oder Beton, bestehend aus einem am Gewindezapfen einer Handbohrmaschine zu befestigenden Fußteil und einem Hohlbohrer mit Diamantkrone, der mittels Einrastverbindung mit dem Fußteil auswechselbar verbunden ist, gekennzeichnet durch die Merkmale:
a) der Fußteil (1) enthält eine kreisrunde Scheibe (3) mit am Umfang mit gleichem Abstand voneinander angeordneten und gegenüber der Stirnfläche (6) vorstehenden Ansätzen (4), die mit dem Umfang der Scheibe (3) bündig stehen,
b) in jedem Ansatz (4) ist an seiner Innenseite eine zur Scheibenmitte offene Nut (5) mit etwa rechteckigem Querschnitt enthalten, wobei die axialen Wandungen der Nuten (5) auf einer gemeinsamen Kreislinie verlaufen,
c) am Verbindungsende des Hohlbohrers (11) ist ein Ringflansch (15 bzw. 34) mit radialen nasenartigen Vorsprüngen (16) befestigt, die mit den Freiräumen (17) zwischen den Ansätzen (4) am Fußteil korrespondieren,
d) die Umfangskanten (18) der Vorsprünge (16) verlaufen auf einem gemeinsamen Umkreis, dessen Durchmesser dem Innendurchmesser der axialen Wandungen der Nuten (5) in den Ansätzen (4) am Fußteil (1) entspricht,
e) an den Abschnitten zwischen den aufeinanderfolgenden Vorsprüngen (16) liegen die Außenkanten (21) auf einem Hüllkreis, dessen Durchmesser kleiner ist als der Innendurchmesser der Ansätze (4) am Fußteil (1), und
f) am in Umfangsrichtung rückwärtigen Ende jedes Vorsprungs (16) ist eine radial vorstehende Nase (19) als Endanschlag angeformt.

2. Bohrsatz nach Anspruch 1, dadurch gekennzeichnet, daß an den Vorsprüngen (16) an der Einlaufseite je eine radial ansteigende Schrägfläche (20) ausgebildet ist.

3. Bohrsatz nach Anspruch 1 oder 2, dadurch gekennzeichnet, daß am Fußteil (1) bzw. am Ringflansch (15) des Hohlbohrers (11) wenigstens drei, vorzugsweise vier Ansätze (4) bzw. Vorsprünge (16) vorgesehen sind.

4. Bohrsatz nach einem der Ansprüche 1 bis 3, dadurch gekennzeichnet, daß die Vorsprünge (16) des Ringflansches (15) in den Innennuten (5) der Ansätze (4) des Fußteils (1) formschlüssig gehalten sind.

5. Bohrsatz nach einem der Ansprüche 1 bis 4, dadurch gekennzeichnet, daß auf der Oberfläche (6) des Fußteils (1) eine dünne Scheibenfederlamelle (10) angeordnet ist, die in ihrer Lage durch einen an einem zentralen Zapfen (7) des Fußteils (1) angreifenden Sicherungsring (9) gehalten ist.

6. Bohrsatz nach einem der Ansprüche 1 bis 5, dadurch gekennzeichnet, daß der Ringflansch (15) außen am Hohlbohrer (11) als Außenflansch angeordnet ist.

7. Bohrsatz nach einem der Ansprüche 1 bis 5, dadurch gekennzeichnet, daß der Ringflansch (34) im Inneren des Hohlbohrers (11) angeordnet ist und durch radiale Stege (36) mit der Wandung des Hohlbohrers (11) verbunden ist.

8. Bohrsatz nach einem der Ansprüche 1 bis 7, gekennzeichnet durch folgende Merkmale:
a) der Hals (22) des Fußteils (1) trägt auf einem Außengewinde (23) eine Spannmutter (24),
b) an der Spannmutter (24) ist an ihrem axial inneren Ende ein Druckring (25) gelagert, der der Unterseite der Deckscheibe (26) des Fußteils (1) benachbart ist,
c) in der Deckscheibe (26) sind vorzugsweise vier mit gleichem Abstand voneinander angeordnete, in Umfangsrichtung verlaufende Langlöcher (27) enthalten,
d) in jedem Langloch (27) ist nach Art eines Wälzlagerkäfigs eine Druckrolle (28) frei rollbeweglich gehalten und
e) die Druckrollen (28) sind in ihrem Durchmesser so bemessen, daß sie beim Anziehen der Spannmutter (24) gegenüber der Oberseite der Deckscheibe (26) vortreten und während der Spannbewegung an der Unterseite der Scheibenlamelle (10) abrollen.

9. Bohrsatz nach Anspruch 8, dadurch gekennzeichnet, daß an der Spannmutter (24) ein achsparalleler, federbelasteter Stift (30) angeordnet ist, der mit einem Anschlagzapfen (32) an der Unterseite der Deckscheibe (26) eine Sicherung gegen eine Rückdrehung der Spannmutter (24) über die Ausgangsstellung hinaus bildet.

10. Bohrsatz nach Anspruch 9, dadurch gekennzeichnet, daß in der Deckscheibe (26) mehrere, mit gleichem Abstand voneinander über den Umfang verteilte Bohrungen (33) für die wahlweise Aufnahme des Anschlagzapfens (32) enthalten sind.
